# EUROPEAN PATENT SPECIFICATION

(11) **EP 3 541 583 B1**
(45) Date of publication and mention of the grant of the patent: **07.06.2023**
(21) Application number: 17710198.7
(22) Date of filing: 09.03.2017
(51) Int. Cl.: B25J 9/10

(54) **STATIC TORQUE ADJUSTING ARRANGEMENT, INDUSTRIAL ROBOT COMPRISING THE ARRANGEMENT AND METHOD FOR ADJUSTING A STATIC TORQUE**
ANORDNUNG ZUR ANPASSUNG EINES STATISCHEN DREHMOMENTS, INDUSTRIEROBOTER MIT DER ANORDNUNG UND VERFAHREN ZUR ANPASSUNG EINES STATISCHEN DREHMOMENTS
AGENCEMENT DE RÉGLAGE DE COUPLE STATIQUE, ROBOT INDUSTRIEL COMPRENANT L'AGENCEMENT ET PROCÉDÉ DE RÉGLAGE D'UN COUPLE STATIQUE

(43) Date of publication of application: 25.09.2019
(73) Proprietor: ABB Schweiz AG, 5400 Baden (CH)
(72) Inventor: NILSSON, Henrik, 723 44 Västerås (SE); MOBERG, Stig, 722 19 Västerås (SE)
(74) Representative: Kransell & Wennborg KB
(86) International application number: PCT/EP2017/055501
(87) International publication number: WO 2018/162061

(56) References cited:
- DE-A1- 3 310 068
- JP-A- 2006 263 832
- US-A- 4 827 786
- US-A1- 2012 112 485

## Description

### Technical Field

The present disclosure generally relates to the control of backlash in industrial robots. In particular, an arrangement for an industrial robot comprising a passive mechanical torque adjusting device for increasing a static torque on an output member, an industrial robot comprising the arrangement and a method for increasing a static torque on an output member of an industrial robot, are provided.

### Background

An industrial robot comprises a manipulator and control equipment. The manipulator comprises at least one robot arm or manipulator comprising a number of arm parts with connecting joints, where the axes of rotation of the joints define the degrees of freedom of the robot. As an example may be mentioned a six-axis robot which usually has a fixed base, a stand that is arranged on the base and that is rotatable about a first axis, and a first robot arm that is rotatable in relation to the stand about a second axis. At the outer end of the first robot arm, a second robot arm is rotatably journalled for rotation about a third axis. This second arm is rotatable about a fourth axis, its own longitudinal axis, and at its outer end supports a robot hand provided with a tool attachment, said robot hand being rotatable in two degrees of freedom about a fifth and a sixth axis, respectively, relative to the second arm.

The movements of the manipulator are made possible by the arrangement of drive means that bring about rotary motions in the respective joints. Each drive means comprises an electric motor and a gear unit, typically a reduction gear. The power supply and the control of an industrial robot of the kind mentioned above are carried out by control equipment, which is not described in more detail in this context.

The working range and the capacity for movement of a manipulator depend, among other things, on the gear units included. An additional factor that is influenced by the gear units is the performance of a robot with respect to precision and/or accuracy. When manufacturing industrial robots, the aim is to arrive at design solutions which enable reducing the total built-in backlash from the gears included therein as much as possible.

Backlash is a gap or play between the engaging gear flanks of two gears. The backlash is thus a clearance caused by the gap between the gear flanks. Due to this, a gear may be moved a distance corresponding to the backlash relative to another gear without mechanical engagement. Backlash is undesirable because it impairs control of the object that is actuated by an actuator gear. Control impairment results from bad path performance when a cog is moving from one gear flank to the other gear flank of that cog, or from imprecise positioning when a cog's location is uncertain in the gap between two cogs.

An actuator gear is arranged to actuate an object, such as a robot arm of an industrial robot, and is driven by one or more gears that in turn are driven by one or more motors. The backlash occurs between the actuator gear and the gear(s) that drive(s) the actuator gear. Especially for large manipulator arms, the mechanical precision in gears may be relatively low. This results in large backlash. One solution to avoid backlash in these situations is to use high-precision gears. High-precision gears are however more expensive and difficult to purchase.

US 2012021867 A1 discloses a system for reducing backlash. The system comprises a mechanical input, a mechanical output, first and second separate mechanical couplers operatively connected to the mechanical input and the mechanical output, a first elastic element connected in series between the first mechanical coupler and the mechanical output to bias the first mechanical coupler in a first direction; and a second elastic element connected in series between the second mechanical coupler and the mechanical output to bias the second mechanical coupler in a second direction, opposite from the first direction.

Although the system in US 2012021867 A1 exhibits no regions of zero stiffness, the system has an expensive and complicated design. Moreover, the system is difficult to retrofit on an existing robot.

DE 3310068 A1 discloses a robot joint comprising a motor, a link part, a motor pinion driven by the motor, and a gear wheel driven by the motor pinion and connected with the link part. The robot joint further comprises a tension band laid around the link part. The tension band has one end connected to a spring and one connected to a piston drive.

### Summary

One object of the present disclosure is to provide a simple, cheap and low weight arrangement for an industrial robot to improve accuracy of the robot. A more particular object of the present disclosure is to provide a simple, cheap and low weight arrangement for an industrial robot to reduce the effects of backlash in the robot.

A further object of the present disclosure is to provide an arrangement for controlling backlash in an industrial robot that enables retrofit on existing robots.

A still further object of the present disclosure is to provide a method for controlling backlash in an industrial robot that solves at least one of the foregoing objects.

According to one aspect, there is provided an arrangement for an industrial robot, the arrangement comprising a rotatable input member; a rotatable output member arranged to rotate about a substantially vertical rotational axis; a gear unit defining a gear ratio between the input member and the output member; and a passive mechanical torque adjusting device configured to apply a torque to the output member around the rotational axis such that the absolute value of a static torque on the output member is increased. The mechanical torque adjusting device is, as its name implies, a mechanical device to adjust the torque on the output member. The mechanical torque adjusting device according to the present disclosure is passive by working entirely without active components, such as a direct or indirect actuation of the mechanical torque adjusting device by an electric motor. In other words, the passive mechanical torque adjusting device may be constituted by a purely mechanical torque adjusting device. Furthermore, the mechanical torque adjusting device may be external to the industrial robot.

The gear unit and the mechanical torque adjusting device may be parallel with respect to the output member. The gear unit may comprise an actuator gear arranged to directly drive (e.g. by meshing gears) the output member. The actuator gear may be driven by one or more motors directly or indirectly, e.g. by one or more gears that in turn are driven by one or more motors. By arranging the gear unit and the mechanical torque adjusting device in parallel, the mechanical torque adjusting device can apply a torque to the output member regardless of whether or not the actuator gear transmits a torque to the output member.

The mechanical torque adjusting device may be configured to apply a substantially constant torque to the output member around the rotational axis at different angular positions of the output member. A substantially constant torque includes a constant torque and may include deviations of the torque of, for example, up to 10 %, such as up to 5%, such as up to 2 %, throughout an angular range of 360°, or more, of the output member around the rotational axis.

The mechanical torque adjusting device may alternatively be configured to apply a variable torque to the output member around the rotational axis at different angular positions of the output member. For example, the variable torque applied by the mechanical torque adjusting device may vary more than 500 %, such as more than 100 %, throughout an angular range of 360°, or more, of the output member around the rotational axis. The applied torque may vary substantially linearly with respect to the angular position of the output member.

The mechanical torque adjusting device may comprise a spring. The spring may for example be constituted by a tension/extension spring, a compression spring and/or a torsion spring. A tension spring may be constituted by a coil spring (i.e., a helical spring) arranged to apply a pulling force (directly or indirectly) to a tangential point of the output member. Correspondingly, a compression spring may be constituted by a coil spring arranged to apply a pushing force (directly or indirectly) to a tangential point of the output member.

A torsion spring may be constituted by a spiral spring. In case a torsion spring is used in the mechanical torque adjusting device, the torsion spring may be arranged to exert a torque to a drive member that in turn transmits the torque to the output member. For example, the drive member may be constituted by a gear wheel having external teeth meshing with external teeth on the output member.

The mechanical torque adjusting device may comprise a spring having a relatively low spring constant in order to apply a substantially constant torque to the output member throughout a range of angular positions of the output member around the rotational axis. Conversely, the mechanical torque adjusting device may comprise a spring having a relatively high spring constant in order to apply a variable torque to the output member around the rotational axis throughout a range of angular positions of the output member around the rotational axis.

The mechanical torque adjusting device may comprise an elongated member connected to the spring and to the output member. An elongated member according to the present disclosure may for example be constituted by a wire, cable, belt or chain or combinations thereof.

The mechanical torque adjusting device may comprise a weight arranged to move in a vertical direction, wherein the mechanical torque adjusting device is configured to transmit the gravity force acting on the weight to the torque applied to the output member. The mechanical torque adjusting device may further comprise a viscous damper to provide a damping force on the weight. The damping force may be proportional to the movement speed of the weight in the vertical direction.

The mechanical torque adjusting device may comprise an elongated member connected to the weight and to the output member. For example, the elongated member may be guided between a horizontal orientation and a vertical orientation by a pulley. However, alternative types of transmissions may be used in order to transmit the gravity force acting on the weight to the torque applied to the output member.

The elongated member may be wound around the output member. For example, both when the elongated member is pulled by the gravity force acting on the weight and when the elongated member is pulled by the force of a tension spring, the elongated member may be wound around the output member, at least in some angular positions of the output member with respect to the rotational axis.

The output member may be constituted by, or fixedly connected to, an arm part of the industrial robot. In any case, the output member may have a generally cylindrical form.

The mechanical torque adjusting device may be arranged to apply a torque to the output member by exerting a pulling force on a tangential point of the cylindrical form of the output member. In this case, the elongated member, or the spring itself in case no elongated member is provided, may be wound around an external surface of the cylindrical form of the output member.

Alternatively, or in addition, the mechanical torque adjusting device may be arranged to apply a torque to the output member by exerting a torque on the output member. This may for example be realized by the use of a torsion spring acting on a gear wheel having external teeth meshing with external teeth on the cylindrical form of the output member.

Throughout the present disclosure, the input member may be constituted by a motor, e.g. an electric motor. Alternatively, the input member may be constituted by any gear of the gear unit (e.g. an actuator gear) that directly or indirectly drives the output member.

The gear unit may be constituted by an eccentric oscillating gear comprising compact gears. The gear unit may alternatively comprise conventional spur gears. However, a gear unit according to the present disclosure may be of any type to define a gear ratio between the input member and the output member, including gear units comprising gears, belts, trains and combinations thereof.

According to a further aspect, there is provided an industrial robot comprising an arrangement according to the present disclosure. The industrial robot may comprise a plurality of axes, for example six or seven axes. In addition, the industrial robot may comprise at least one axis oriented substantially vertically.

According to a further aspect, there is provided a method for controlling backlash in an industrial robot comprising an output member configured to rotate about a substantially vertical rotational axis, the method comprises applying a torque to the output member around the rotational axis such that the absolute value of a static torque on the output member is increased.

The method may further comprise the steps of providing a passive mechanical torque adjusting device to the industrial robot ready for operation; and arranging the mechanical torque adjusting device to apply the torque to the output member around the rotational axis. In other words, an already existing industrial robot can be retrofitted with a passive mechanical torque adjusting device arranged to apply the torque to the output member. The mechanical torque adjusting device of the method may be of any type according to the present disclosure.

The application of the torque may comprise applying a substantially constant torque to the output member around the rotational axis at different angular positions of the output member. Alternatively, the application of the torque may comprise applying a variable torque to the output member around the rotational axis at different angular positions of the output member.

As used herein, a substantially vertical orientation includes a vertical orientation and may include deviations therefrom with, for example, up to 5 %, such as up to 2 %.

### Brief Description of the Drawings

Further details, advantages and aspects of the present disclosure will become apparent from the following embodiments taken in conjunction with the drawings, wherein:
- Fig. 1:: schematically represents a side view of an industrial robot;
- Fig. 2:: schematically represents a side view of an industrial robot comprising an arrangement having a mechanical torque adjusting device;
- Fig. 3:: schematically represents typical characteristics of a gear unit of each of the industrial robots in Figs. 1 and 2;
- Fig. 4:: schematically represents a side view of an industrial robot comprising an arrangement having an alternative mechanical torque adjusting device; and
- Fig. 5:: schematically represents a side view of an industrial robot comprising an arrangement having a further alternative mechanical torque adjusting device.

### Detailed Description

In the following, an arrangement for an industrial robot comprising a passive mechanical torque adjusting device for increasing a static torque on an output member, an industrial robot comprising the arrangement and a method for increasing a static torque on an output member of an industrial robot will be described. The same reference numerals will be used to denote the same or similar structural features.

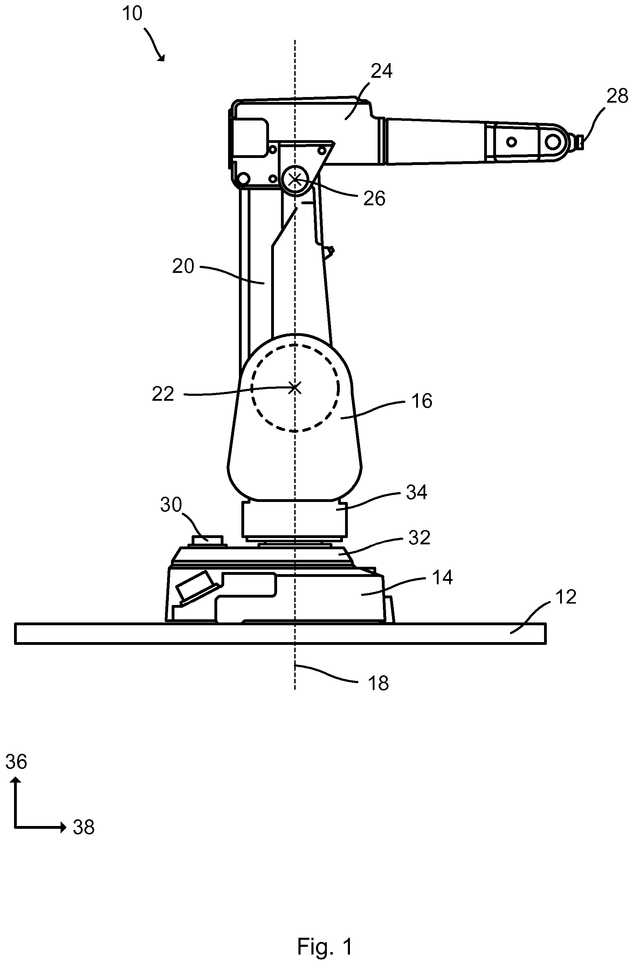

Fig. 1 schematically represents a side view of a previously known industrial robot 10 positioned on a horizontal support structure 12. The robot 10 comprises a fixed base 14 and an arm part 16 arranged to rotate with respect to the base 14 about a substantially vertical rotational axis 18. In this example, the arm part 16 is constituted by a stand or carousel.

The robot 10 further comprises an arm part 20 arranged to rotate with respect to the arm part 16 about a substantially horizontal rotational axis 22 and an arm part 24 arranged to rotate with respect to the arm part 20 about a substantially horizontal rotational axis 26. The robot 10 of the example in Fig. 1 also comprises an end effector 28, an input member 30 (here in the form of an electric motor), a gear unit 32 and an output member 34. In this example, the output member 34 is integrally formed with the arm part 16 of the robot 10 and is constituted by a body of generally cylindrical appearance.

The gear unit 32 defines a gear ratio between the input member 30 and the output member 34. The gear unit 32 may for example be constituted by an eccentric oscillating gear comprising compact gears. Fig. 1 further illustrates a vertical direction 36 and a horizontal direction 38.

The characteristics of the gear unit 32 have a large impact on robot accuracy. Examples of such characteristics are backlash, lost motion, friction, stiffness and transmission errors.

Since the output member 34 is substantially vertically arranged, i.e. arranged to rotate about the substantially vertical rotational axis 18, the output member 34 has a low or zero static torque. As a consequence, the accuracy of the output member 34 is impaired due to backlash and low stiffness in a low torque region of the gear unit 32. In contrast, the horizontal axis 26 has a static torque not equal to zero due to the gravity torque acting on the arm part 24.

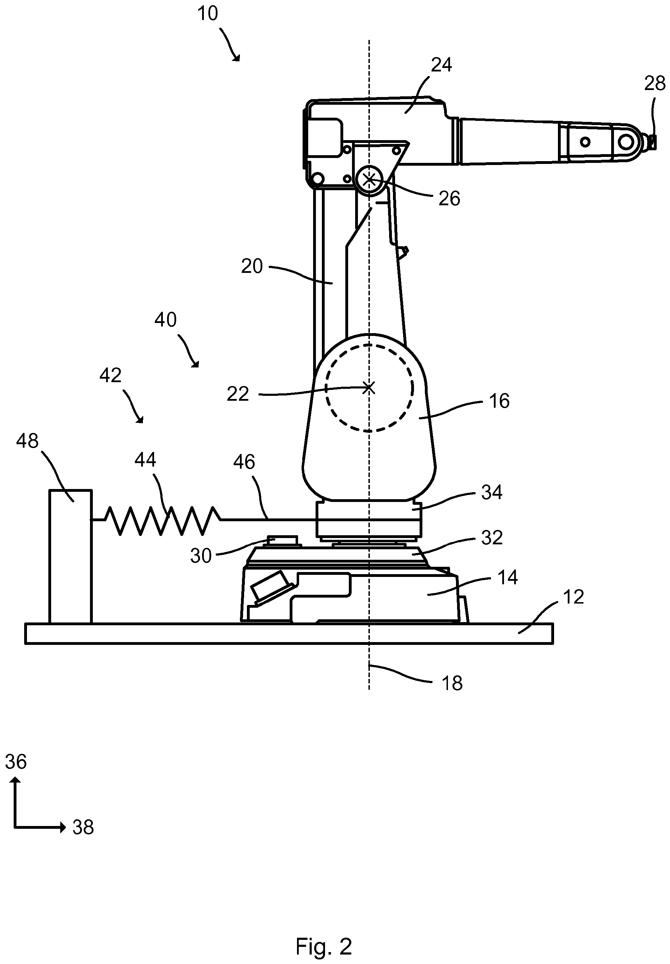

Fig. 2 schematically represents a side view of an industrial robot 10 comprising an arrangement 40 for adjusting a static torque of the robot 10. The arrangement 40 comprises the input member 30, the output member 34, the gear unit 32 and a passive mechanical torque adjusting device 42. The mechanical torque adjusting device 42 of this example comprises a tension spring 44 and an elongated member 46. The mechanical torque adjusting device 42 works passively and is not driven by any active component (e.g. an electric motor). The spring 44 is connected to the elongated member 46 and to a stationary structure 48 fixed with respect to the support structure 12. However, the stationary structure 48 may alternatively be constituted by, or fixedly connected to, the base 14 or a part of the gear unit 32. The elongated member 46 is connected to the output member 34 and is substantially horizontally oriented.

In the illustration of Fig. 2, as the arm part 16 rotates in a first direction around the rotational axis 18 (in the counter clockwise direction as seen from above), the elongated member 46 is wound around the output member 34. As the arm part 16 rotates in a second direction around the rotational axis 18 (in the clockwise direction as seen from above), opposite to the first direction, the elongated member 46 is unwound around the output member 34. The winding and unwinding directions may of course be reversed.

The mechanical torque adjusting device 42 applies a substantially constant torque to the output member 34 around the rotational axis 18 throughout a range of angular positions of the output member 34 with respect to the rotational axis 18, e.g. throughout 360° or more. Thereby, the absolute value of the static torque on the output member 34 is increased from a low value or from zero. Although the spring 44 is illustrated as a coil spring in Fig. 2, the spring 44 may be constituted by alternative types of springs to contribute to apply a substantially constant torque to the output member 34 around the rotational axis 18.

From a control and accuracy perspective, it is an advantage to have the static torque outside the low torque region. The static torque is the torque on the output member 34 when the robot 10 is standing still. With the static torque outside the low torque region, the torque will anyway go through the low torque region in some cases, e.g. during high acceleration, but the impact on accuracy is much smaller, particularly in low speed applications where high accuracy is needed.

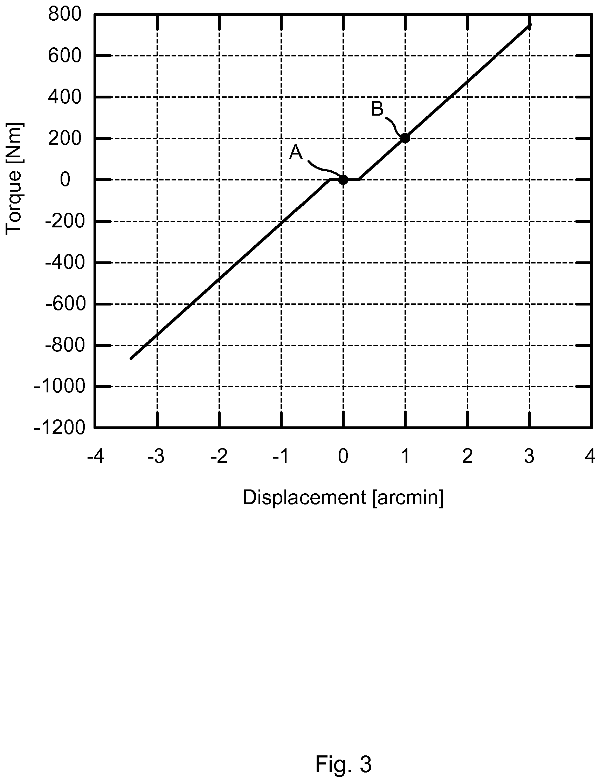

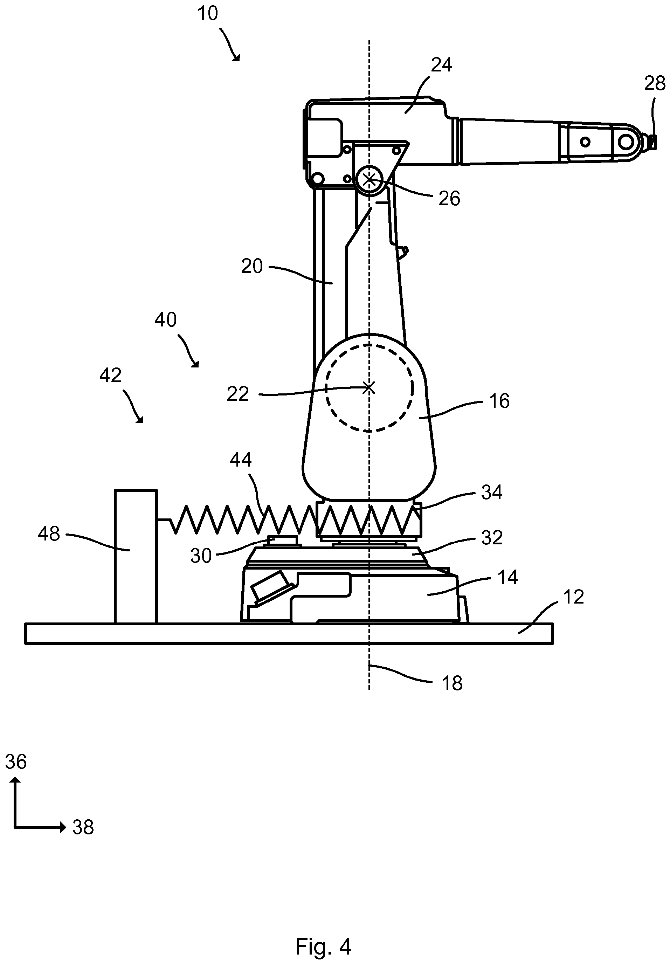

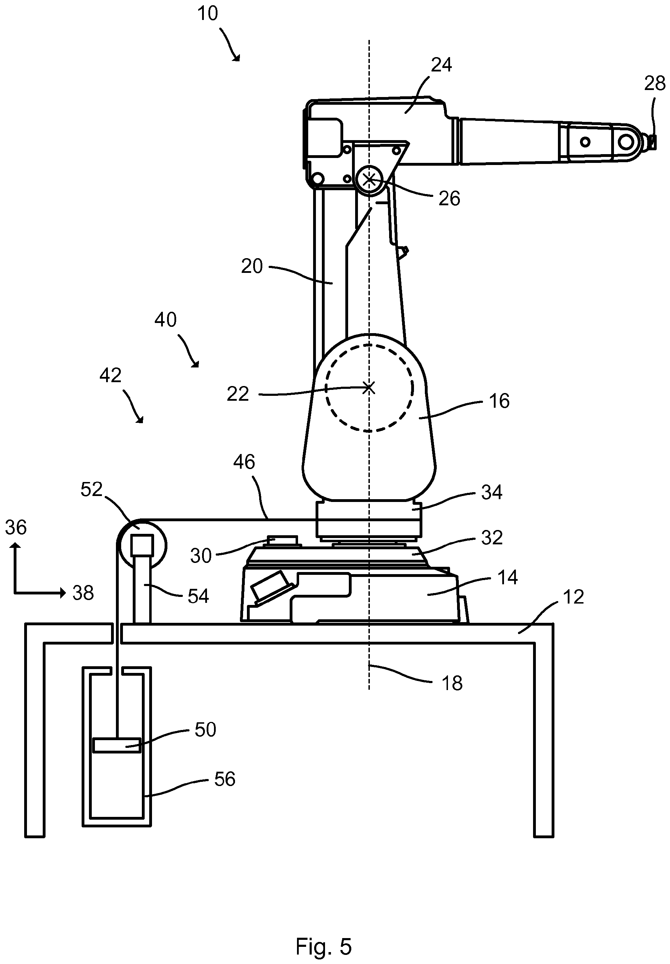

Fig. 3 schematically represents typical characteristics of the gear unit 32 of each of the industrial robots 10 in Figs. 1 and 2. Fig. 3 is also applicable to Figs. 4 and 5 described below.

Point A in Fig. 3 represents the operating point of the gear unit 32 of the robot 10 in Fig. 1. A low stiffness region around zero torque can be seen around point A. Due to the torque applied by the mechanical torque adjusting device 42 to the output member 34, the static torque is adjusted from point A to e.g. point B. Point B thus represents the operating point of the gear unit 32 of the robot 10 in Fig. 2.

For example, if the mechanical torque adjusting device 42 applies a torque of -200 Nm on the output member 34, a control system of the robot 10 will command the input member 30 (i.e. the electrical motor in this implementation) to output 200 Nm to obtain standstill, i.e. to obtain zero resulting torque on the output member 34. The torque from the input member 30 will be transmitted through the gear unit 32 and hence the static torque of the gear unit 32 is adjusted to 200 Nm (i.e. point B). Thereby, the operating point of the gear unit 32 is moved away from the backlash region. Experiments show that the arrangement 40 comprising the mechanical torque adjusting device 42 can improve the roundness of a circular path followed by the end effector 28, e.g. from 0.62 mm to 0.26 mm. This is very advantageous in, for example, laser cutting applications. Thereby, the application of the torque to the output member 34 around the rotational axis 18 such that the static torque on the output member 34 is increased constitutes a simple and effective method to increase the accuracy of the robot 10.

The mechanical torque adjusting device 42 can also be retrofitted to an already existing and operative industrial robot 10 as a mechanical add-on. Thereby, instead of replacing the gear unit 32 with an expensive high precision gear unit 32 (or replacing the entire robot 10), the provision of a passive mechanical torque adjusting device 42 to an already existing robot 10 constitutes a cheap, simple and effective measure to increase the accuracy of the robot 10.

The mechanical torque adjusting device 42 does not have to provide a constant or substantially constant torque to the output member 34. Instead, the mechanical torque adjusting device 42 may be configured to apply a variable torque to the output member 34 around the rotational axis 18 at different angular positions of the output member 34. In this case, the varying torque can be included in the dynamic model of the robot 10.

Fig. 4 schematically represents a side view of an arrangement 40 for adjusting the static torque of the industrial robot 10 comprising an alternative mechanical torque adjusting device 42. The mechanical torque adjusting device 42 of Fig. 4 comprises a spring 44 directly connected to the output member 34. The spring 44 is also wound around the output member 34 and connected to the stationary structure 48 (or alternatively to the base 14 or to a part of the gear unit 32). Thereby, the spring 44 applies a substantially constant torque to the output member 34 around the rotational axis 18 such that the static torque on the output member 34 is increased.

Fig. 5 schematically represents a side view of an arrangement 40 for adjusting the static torque of the industrial robot 10 comprising a further alternative mechanical torque adjusting device 42. The mechanical torque adjusting device 42 of Fig. 5 comprises an elongated member 46, here implemented as a wire, connected to a weight 50. The elongated member 46 is wound around a pulley 52 supported on a stationary pulley support 54 on the support structure 12. The stationary pulley support 54 may however alternatively be constituted by, or fixedly connected to, the base 14 or a part of the gear unit 32.

The weight 50 is arranged to move in up and down in the vertical direction 36 as the output member 34 rotates in the first and second direction, respectively, around the rotational axis 18. Due to the constant gravity force acting on the weight 50, the elongated member 46 exerts a constant torque on the output member 34. The elongated member 46 and the pulley 52 merely constitute one example of a suitable transmission to apply a constant torque on the output member 34 from the gravity force acting on the weight 50.

The mechanical torque adjusting device 42 of Fig. 5 further comprises a cylinder 56 containing damping fluid. The cylinder 56 and the weight 50 functions as a viscous damper to provide a damping force that is proportional to the movement speed of the weight 50 in the vertical direction 36.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

## Claims

1. Arrangement (40) for an industrial robot (10), the arrangement (40) comprising:
- a rotatable input member (30);
- a rotatable output member (34) arranged to rotate about a substantially vertical rotational axis (18);
- a gear unit (32) defining a gear ratio between the input member (30) and the output member (34); and
- a passive mechanical torque adjusting device (42) configured to apply a torque to the output member (34) around the rotational axis (18) such that the absolute value of a static torque on the output member (34) is increased.

2. The arrangement (40) according to claim 1, wherein the gear unit (32) and the mechanical torque adjusting device (42) are parallel with respect to the output member (34).

3. The arrangement (40) according to claim 1 or 2, wherein the mechanical torque adjusting device (42) is configured to apply a substantially constant torque to the output member (34) around the rotational axis (18) at different angular positions of the output member (34).

4. The arrangement (40) according to claim 1 or 2, wherein the mechanical torque adjusting device (42) is configured to apply a variable torque to the output member (34) around the rotational axis (18) at different angular positions of the output member (34).

5. The arrangement (40) according to any of the preceding claims, wherein the mechanical torque adjusting device (42) comprises a spring (44).

6. The arrangement (40) according to claim 5, wherein the spring (44) is a tension spring.

7. The arrangement (40) according to claim 5 or 6, wherein the mechanical torque adjusting device (42) comprises an elongated member (46) connected to the spring (44) and to the output member (34).

8. The arrangement (40) according to any of claims 1 to 3, wherein the mechanical torque adjusting device (42) comprises a weight (50) arranged to move in a vertical direction (36), wherein the mechanical torque adjusting device (42) is configured to transmit the gravity force acting on the weight (50) to the torque applied to the output member (34).

9. The arrangement (40) according to claim 8, wherein the mechanical torque adjusting device (42) comprises a viscous damper arranged to provide a damping force on the weight (50).

10. The arrangement (40) according to claim 8 or 9, wherein the mechanical torque adjusting device (42) comprises an elongated member (46) connected to the weight (50) and to the output member (34).

11. The arrangement (40) according to claim 7 or 10, wherein the elongated member (46) is wound around the output member (34).

12. The arrangement (40) according to any of the preceding claims, wherein the output member (34) is constituted by, or fixedly connected to, an arm part (16) of the industrial robot (10).

13. Industrial robot (10) comprising an arrangement (40) according to any of the preceding claims.

14. Method for controlling backlash in an industrial robot (10) comprising an output member (34) configured to rotate about a substantially vertical rotational axis (18), the method comprising:
- applying a torque to the output member (34) around the rotational axis (18) such that the absolute value of a static torque on the output member (34) is increased.

15. The method according to claim 14, further comprising the steps of:
- providing a passive mechanical torque adjusting device (42) to the industrial robot (10) ready for operation; and
- arranging the mechanical torque adjusting device (42) to apply the torque to the output member (34) around the rotational axis (18).

## Patentansprüche

1. Anordnung (40) für einen Industrieroboter (10), wobei die Anordnung (40) Folgendes umfasst:
- ein drehbares Eingangselement (30);
- ein drehbares Ausgangselement (34), das dazu angeordnet ist, sich um eine im Wesentlichen vertikale Drehachse (18) zu drehen;
- ein Getriebe (32), das ein Übersetzungsverhältnis zwischen dem Eingangselement (30) und dem Ausgangselement (34) definiert; und
- eine passive mechanische Drehmomentanpassvorrichtung (42), die dazu ausgelegt ist, ein Drehmoment um die Drehachse (18) so auf das Ausgangselement (34) aufzubringen, dass der Absolutwert eines statischen Drehmoments auf das Ausgangselement (34) erhöht wird.

2. Anordnung (40) gemäß Anspruch 1, wobei das Getriebe (32) und die mechanische Drehmomentanpassvorrichtung (42) parallel zum Ausgangselement (34) angeordnet sind.

3. Anordnung (40) gemäß Anspruch 1 oder 2, wobei die mechanische Drehmomentanpassvorrichtung (42) dazu ausgelegt ist, auf das Ausgangselement (34) ein im Wesentlichen konstantes Drehmoment um die Drehachse (18) bei verschiedenen Winkelpositionen des Ausgangselements (34) aufzubringen.

4. Anordnung (40) gemäß Anspruch 1 oder 2, wobei die mechanische Drehmomentanpassvorrichtung (42) dazu ausgelegt ist, bei verschiedenen Winkelpositionen des Ausgangselements (34) ein variables Drehmoment um die Drehachse (18) auf das Ausgangselement (34) aufzubringen.

5. Anordnung (40) gemäß einem der vorhergehenden Ansprüche, wobei die mechanische Drehmomentanpassvorrichtung (42) eine Feder (44) umfasst.

6. Anordnung (40) gemäß Anspruch 5, wobei die Feder (44) eine Zugfeder ist.

7. Anordnung (40) gemäß Anspruch 5 oder 6, wobei die mechanische Drehmomentanpassvorrichtung (42) ein längliches Element (46) umfasst, das mit der Feder (44) und dem Ausgangselement (34) verbunden ist.

8. Anordnung (40) gemäß einem der Ansprüche 1 bis 3, wobei die mechanische Drehmomentanpassvorrichtung (42) ein Gewicht (50) umfasst, das dazu angeordnet ist, sich in einer vertikalen Richtung (36) zu bewegen, wobei die mechanische Drehmomentanpassvorrichtung (42) dazu ausgelegt ist, die auf das Gewicht (50) wirkende Schwerkraft auf das auf das Ausgangselement (34) aufgebrachte Drehmoment zu übertragen.

9. Anordnung (40) gemäß Anspruch 8, wobei die mechanische Drehmomentanpassvorrichtung (42) einen viskosen Dämpfer umfasst, der dazu angeordnet ist, eine Dämpfungskraft auf das Gewicht (50) auszuüben.

10. Anordnung (40) gemäß Anspruch 8 oder 9, wobei die mechanische Drehmomentanpassvorrichtung (42) ein längliches Element (46) umfasst, das mit dem Gewicht (50) und dem Ausgangselement (34) verbunden ist.

11. Anordnung (40) gemäß Anspruch 7 oder 10, wobei das längliche Element (46) um das Ausgangselement (34) gewickelt ist.

12. Anordnung (40) gemäß einem der vorhergehenden Ansprüche, wobei das Ausgangselement (34) durch einen Armteil (16) des Industrieroboters (10) gebildet wird oder mit diesem fest verbunden ist.

13. Industrieroboter (10), umfassend eine Anordnung (40) gemäß einem der vorhergehenden Ansprüche.

14. Verfahren zum Steuern des Umkehrspiels in einem Industrieroboter (10), der ein Ausgangselement (34) umfasst, das dazu ausgelegt ist, sich um eine im Wesentlichen vertikale Drehachse (18) zu drehen, wobei das Verfahren umfasst:
- Aufbringen eines Drehmoments auf das Ausgangselement (34) um die Drehachse (18), sodass der Absolutwert eines statischen Drehmoments auf das Ausgangselement (34) erhöht wird.

15. Verfahren gemäß Anspruch 14, ferner umfassend die folgenden Schritte:
- Bereitstellen einer passiven mechanischen Drehmomentanpassvorrichtung (42) für den betriebsbereiten Industrieroboter (10); und
- Anordnen der mechanischen Drehmomentanpassvorrichtung (42), um das Drehmoment um die Drehachse (18) auf das Ausgangselement (34) zu übertragen.

## Revendications

1. Agencement (40) pour un robot industriel (10), l'agencement (40) comprenant :
- un élément d'entrée rotatif (30) ;
- un élément de sortie rotatif (34) agencé pour entrer en rotation autour d'un axe de rotation substantiellement vertical (18) ;
- une unité d'engrenage (32) définissant un rapport d'engrenage entre l'élément d'entrée (30) et l'élément de sortie (34) ; et
- un dispositif de réglage de couple mécanique passif (42) configuré pour appliquer un couple à l'élément de sortie (34) autour de l'axe de rotation (18) de telle sorte que la valeur absolue d'un couple statique sur l'élément de sortie (34) soit augmentée.

2. Agencement (40) selon la revendication 1, dans lequel l'unité d'engrenage (32) et le dispositif de réglage de couple mécanique (42) sont parallèles par rapport à l'élément de sortie (34).

3. Agencement (40) selon la revendication 1 ou la revendication 2, dans lequel le dispositif de réglage de couple mécanique (42) est configuré pour appliquer un couple substantiellement constant à l'élément de sortie (34) autour de l'axe de rotation (18) à différentes positions angulaires de l'élément de sortie (34) .

4. Agencement (40) selon la revendication 1 ou la revendication 2, dans lequel le dispositif de réglage de couple mécanique (42) est configuré pour appliquer un couple substantiellement variable à l'élément de sortie (34) autour de l'axe de rotation (18) à différentes positions angulaires de l'élément de sortie (34) .

5. Agencement (40) selon l'une quelconque des revendications précédentes, dans lequel le dispositif de réglage de couple mécanique (42) comprend un ressort (44) .

6. Agencement (40) selon la revendication 5, dans lequel le ressort (44) est un ressort de tension.

7. Agencement (40) selon la revendication 5 ou la revendication 6, dans lequel le dispositif de réglage de couple mécanique (42) comprend un élément allongé (46) raccordé au ressort (44) et à l'élément de sortie (34) .

8. Agencement (40) selon l'une quelconque des revendications 1 à 3, dans lequel le dispositif de réglage de couple mécanique (42) comprend un poids (50) agencé pour se déplacer dans une direction verticale (36), le dispositif de réglage de couple mécanique (42) étant configuré pour transmettre la force de gravité agissant sur le poids (50) au couple appliqué à l'élément de sortie (34).

9. Agencement (40) selon la revendication 8, dans lequel le dispositif de réglage de couple mécanique (42) comprend un amortisseur visqueux agencé pour fournir une force d'amortissement sur le poids (50).

10. Agencement (40) selon la revendication 8 ou la revendication 9, dans lequel le dispositif de réglage de couple mécanique (42) comprend un élément allongé (46) raccordé au poids (50) et à l'élément de sortie (34) .

11. Agencement (40) selon la revendication 7 ou la revendication 10, dans lequel l'élément allongé (46) est enroulé autour de l'élément de sortie (34).

12. Agencement (40) selon l'une quelconque des revendications précédentes, dans lequel l'élément de sortie (34) est constitué par, ou raccordé de manière fixe à, une partie bras (16) du robot industriel (10).

13. Robot industriel (10) comprenant un agencement (40) selon l'une quelconque des revendications précédentes.

14. Procédé de contrôle de jeu dans un robot industriel (10) comprenant un élément de sortie (34) configuré pour entrer en rotation autour d'un axe de rotation substantiellement vertical (18), le procédé comprenant :
- l'application d'un couple à l'élément de sortie (34) autour de l'axe de rotation (18) de telle sorte que la valeur absolue d'un couple statique sur l'élément de sortie (34) soit augmentée.

15. Procédé selon la revendication 14, comprenant en outre les étapes consistant à :
- fournir un dispositif de réglage de couple mécanique passif (42) au robot industriel (10) prêt à fonctionner ; et
- agencer le dispositif de réglage de couple mécanique (42) pour appliquer le couple à l'élément de sortie (34) autour de l'axe de rotation (18).
